# EUROPEAN PATENT APPLICATION

(11) **EP 0 916 264 A1**
(43) Date of publication of application: **19.05.1999**
(21) Application number: 98203074.4
(22) Date of filing: 11.09.1998
(51) Int. Cl.: A22C 21/00

(54) **Shackle for supporting poultry**

(30) Priority: 12.11.1997 US 968052
(71) Applicant: SYSTEMATE HOLLAND B.V., NL-3281 AC Numansdorp (NL)
(72) Inventor: Hazenbroek, Jacobus Eliza, 3286 LH Klaaswaal (NL); Stooker, Dirk Cornelis, 3295 AL 's-Gravendeel (NL)
(74) Representative: Ferguson, Alexander

(57) **Abstract**

A shackle (1) for transporting a poultry carcass suspended by its legs along a processing line, comprising a hanger suspension member (10) having a first end adapted to be connected to an overhead conveyor and a second end;
a carcass hanger (11) having a first end hinged through a first hinged connection to said second end of the hanger suspension member and a second end having poultry leg holding means for suspending the poultry carcass during movement along the overhead conveyor, the first hinged connection having a substantially horizontal axis; and
locking means (20) for locking the hinged connection in at least one position in at least one hinging direction.

## Description

The invention relates to a shackle for transporting a poultry carcass suspended by its legs or other part(s) along a processing line where various subsequent operations are carried out on the carcass, such as cutting off the wings, cropping, eviscerating, inspecting, weighing, etcetera.

Such shackles are well known in the art and described in various patents, such as US patents 3.132.373, 3.263.270, 3.298.500, 3.563.363, 3.781.946 and 5.505.657.

As mentioned in the preamble, operations of various kind have to be performed on the carcass. In some of these operations, the carcass will be (alternatively or additionally) supported by supports -such as brackets- arranged on the device with which the operation is carried out. In most cases, the carcass is to be held in an orientation or position different from a normal free hanging position. To this end, various known shackle structures are provided with an articulated connection to permit a pivoting movement of the actual supporting hanger part with respect to the part with which the hanger is suspended on the overhead conveyor about a horizontal axis. In those cases, the shackle can be supported by rollers which are attached to the shackle and are supported in rails or alternatively the carcass is supported by guiding and supporting bars extending in the direction of travel of the carcass.

There is a need for an increased control of the position and orientation of a carcass which is transported by an overhead conveyor.

There is furthermore a need to limit the provisions necessary for controlling the orientation and/or position of a carcass which is transported by an overhead conveyor.

To this end, the invention provides a shackle for transporting a poultry carcass suspended by its legs or other parts along a processing line, comprising a hanger suspension member having a first end adapted to be connected to an overhead conveyor and a second end; a carcass hanger having a first end hinged through a first hinged connection to said second end of the hanger suspension member and a second end having poultry holding means -such as poultry leg holding means for suspending the poultry carcass during movement along the overhead conveyor, the first hinged connection having a substantially horizontal axis; and locking means for locking the first hinged connection in at least one position in at least one hinging direction.

In the shackle according to the invention, the shackle can be controlled in at least one orientation and otherwise is free to pivot to another orientation about a horizontal axis. Thus, the shackle can be brought in the condition required for the specific stage of processing. Due to the arrangement of the locking means on the shackle, the need for special positioning provisions at the overhead conveyor is decreased.

Preferably, said locking means is arranged to be vertically movable with respect to said hanger suspension member between a locking position and a hinge connection releasing position.

In addition or alternatively, said locking means is arranged to be vertically movable with respect to said carcass hanger between a locking position and a hinge connection releasing position.

In addition, preferably, said locking position is located below said hinge connection release position, so as to permit the release of the locked connection by exerting a lifting force on the locking means. This lifting force can be generated by means of a stationary rod or the like.

In one further development of the shackle according to the invention, the arrangement is such that in said locked condition said carcass hanger is substantially vertically oriented. This arrangement is especially suited for use in weighing stations. In the normal, vertical position the shackle itself is a rigid structure, so that the carcass is held stable to a large extent, which may be of advantage during the various processing stages in view of stability. Arrived at the weighing station, the locking connection can be released, so as to let the hanger and the carcass suspended by it, pivot -with the help of stationary guiding members such as rods or a guiding plate- towards a more or less horizontal orientation in which the carcass is supported on a weighing plate. After having been weighed the carcass can be permitted to pivot back again towards a vertical orientation and the locking means to automatically return to their locking position.

Alternatively, the weighing takes place by measuring the weight of the carcass on the carcass hanger, the carcass hanger being supportable by means of supports on weighing surfaces, wherein the carcass hanger comprises a first hanger part being connected to the hanger suspension member and a second hanger part forming the actual hanger, said first and second hanger parts being connected to each other by means of a second hinged connection, said second hinged connection comprising said supports.

Preferably, the second hinged connection is adapted to allow a rotation of the first hanger part with respect to the second hanger part about an angle of more than 90 degrees, so as to limit or prevent influence of the weight of the components of the shackle located above the second hinged connection on the weighing process.

Preferably, said second hinged connection is provided with wheels for support on a weighing track.

Preferably, said first hanger part and said second end of said hanger suspension member are provided with surfaces for confining said second hanger part in the locked condition of the carcass hanger.

Preferably, said carcass hanger is freely hingeable outside said locking condition so as to facilitate any manipulation of the orientation of the carcass by means of stationary means. In addition, permitting a free swinging movement of the carcass will be beneficial for the weighing process.

In a simple embodiment of the hanger according to the invention, said hanger suspension member has a hook member and said locking member is a locking pin which is arranged for movement in and out of the hook member.

Preferably, said carcass hanger is provided with at least one slot for guidance of the locking pin during its movement in and out of the hook member.

Preferably, said hinge connection is located above said locking pin.

In a further development of the shackle according to the invention, said hanger suspension member and said carcass hanger are shaped to fit at least partly into each other in the locked position. Thus the connection is shielded off to some extent, decreasing the risk of contamination.

In a further embodiment, said carcass hanger forms a substantially U-shaped receiving space for the hook member, as viewed in horizontal cross section. Preferably, said U-shaped receiving space is then arranged to open in the processing direction of the overhead conveyor.

In addition, the invention provides a method of weighing poultry carcasses comprising:
suspending carcasses by their legs from carcass hangers of poultry shackle assemblies each having a carcass hanger bracket suspended from a hanger rod by inserting the knuckles of the legs through the front leg-receiving recesses of each carcass hanger;
advancing the poultry shackle assemblies and their carcasses in series along a processing line while maintaining a rigid -though releasable- connection between said hanger rod and said carcass hanger bracket;
in response to advancing the poultry shackle assemblies along the processing line unlocking said rigid connection between said hanger rod and said carcass hanger bracket so as to allow a free swinging movement of the carcass hanger bracket with respect to the hanger rod in a vertical plane extending in processing direction;
supporting said carcass hanger bracket on stationary supports while advancing said poultry shackle assemblies towards and into a weighing station;
weighing each carcass hanger bracket with its carcass
   by means of weighing means accommodated in said supports; and
after weighing ceasing to support said carcass hanger bracket on said stationary supports and preferably also locking said connection between the hanger rod and the carcass hanger bracket.

From another point of view the invention relates to a shackle for transporting a poultry carcass suspended by its legs (or other parts) along a processing line where various subsequent operations are carried out on the carcass, comprising a hanger suspension member and a carcass hanger, said hanger suspension member and said carcass hanger being articulated to each other in a connection, said shackle having means for locking said articulated connection in at least one position and being movable to release said articulated connection.

Preferably, said shackle has a hanger suspension member which is elongated, wherein said articulated connection is located at the lower end of said hanger connection member.

The invention further relates to an assembly of an overhead conveyor with a plurality of shackles according to the invention, and stationary operating means for operating the above-mentioned locking means on the shackle.

This invention relates to shackles for transporting poultry carcasses along a processing line wherein the carcasses are eviscerated or otherwise treated, and the carcasses are visually inspected for disease, improper evisceration, contamination or other blemishes.

In the processing of poultry, such as chickens, which are to be sold to the public, typically the processing steps such as evisceration of the carcasses and the cut up of the carcasses are performed automatically on a poultry processing line, whereby the birds are suspended by their legs and transported in series through a plurality of processing functions.

In order to eviscerate poultry carcasses, the typical process steps include decapitating the carcasses, opening the vent of the carcasses, and removing the viscera from the vent opening. Typically, each carcass is suspended by its legs from a shackle that is suspended from and moved along an overhead conveyor rail, with the birds being moved by the shackles in closely spaced series through the evisceration station. The eviscerator extends a spoon or loop device into the opened vent, downwardly into the visceral cavity and then scoops the viscera upwardly from the bird. Once the birds have been mechanically eviscerated, the birds and their drawn viscera must be inspected visually for imperfections, such as disease, incomplete evisceration, contamination, etc. While the birds are still suspended by their shackles, they are transported past an inspector who is trained to look for the blemishes. If a bird is not perfect, the inspector removes the bird from the processing line.

One of the problems involved with visually inspecting poultry carcasses as they move rapidly along a processing line is that the inspector has a difficult time inspecting the visceral cavities of the birds. The visceral cavities of the birds face upwardly as they move along the processing line, and the inspector usually is spaced laterally from the processing line. Also, it is desirable to move the birds as rapidly as possible along the processing line so as to maximize the production of the processing system.

Thus, it would be desirable to have a means whereby each poultry carcass is tilted to an attitude that exposes its visceral cavity in a lateral direction with respect to the processing line so that a poultry inspector can inspect the visceral cavity of each bird.

Briefly described, the present invention further relates to a tiltable poultry shackle for transporting a poultry carcass, such as the carcass of a chicken, along a poultry processing line, with the carcass suspended by its legs. The shackle includes a hanger rod which is connected at its first or upper end to a trolley of a suspended rail and trolley transport line. A carcass hanger has its upper or first end connected to the lower end of the hanger rod, and it includes at its lower or second end leg-receiving recesses for receiving the legs of a poultry carcass, for suspending the poultry carcass for movement along the processing line.

A clevis is mounted to the upper end of the carcass hanger and is tiltably connected to the lower end of the hanger rod, for tilting the carcass hanger and the carcass suspended from the carcass hanger with respect to the hanger rod. A lock collar is slidably mounted to the hanger rod and is movable along the length of the hanger rod into and out of engagement with the clevis of the carcass hanger. The clevis of the carcass hanger has a recess or notch which is engagable by the lock collar when the carcass hanger has been tilted to a predetermined tilt angle with respect to the hanger rod. Thus, the clevis and the lock collar function as a lock means to hold the hanger rod and its bird at a tilted angle with respect to the hanger rod whereby the visceral cavity of the bird is exposed laterally of the processing line and can be inspected by a person located adjacent the processing line.

A plurality of guide rods are located along the path of the hanger rod and carcass hanger for controlling the lateral movements of the hanger rod and for tilting the carcass hanger with respect to the hanger rod, and for raising the lock collar out of engagement with the clevis, thereby unlocking the carcass hanger to allow it to respond to gravity and swing back to a vertically oriented attitude.

Thus, it is an object of this invention to provide a shackle for transporting an eviscerated poultry carcass suspended by its legs along a processing line, and for tilting the poultry carcass to a predetermined angle so as to laterally expose the eviscerated cavity of the bird.

Another object of this invention is to provide an improved shackle for transporting poultry carcasses along a processing path, with the carcasses being suspended by their legs, with the shackle having a lower carcass hanger that is freely pivoted with respect to an upper hanger rod, but which can be expediently locked into a tilted position and released from the tilted position for the purpose of briefly orienting the eviscerated cavity of the carcass in a lateral attitude for inspection, and which returns the carcass to an upright attitude for further processing.

According to a further development of the invention a shackle assembly combining the two previous mentioned hinge/locking provisions is provided. Thus, the invention provides a shackle assembly for transporting a poultry carcass suspended by its legs along a processing line, comprising
a hanger suspension member having a first end adapted to be connected to an overhead conveyor and a second end, said suspension member being provided with an internal, primary hinge connection, said primary hinge connection having a substantially horizontal axis;
a carcass hanger having a plane of symmetry and a first end hinged through a secondary hinged connection to said second end of the hanger suspension member and a second end having poultry leg holding means for suspending the poultry carcass during movement along the overhead conveyor, the secondary hinged connection having a substantially horizontal axis;
first releasable locking means for locking said primary hinge connection in an angled position in which the hanger is tilted towards the lateral side of the path of conveyance; and
second releasable locking means for locking said secondary hinged connection in a vertical position and -after being released- allowing a swinging movement perpendicular to said plane of symmetry.

Other objects, features and advantages of the present invention will become apparent upon reading the following specification, when taken in conjunction with the accompanying drawings.

Below, the invention will be described by reference to two exemplary embodiments shown in the accompanying drawings, in which:
Figure 1 is a front elevation view, partly cut away, on a first embodiment of the shackle according to the invention;
Figure 2 is a side elevation view on the shackle of figure 1;
Figures 3A-C show the main parts of the shackle of figures 1 and 2, respectively;
Figure 4 shows the condition of the shackle of figures 1-3 during a weighing process;
Figure 5 is a rear elevational view of the shackle assembly, with the front view being substantially identical thereto;
Figure 6 is a side elevational view of the shackle assembly;
Figure 7 is a partial view of the upper portion of the carcass hanger and the lower portion of the hanger rod, showing the clevis and lock collar, with guide rods controlling the angle of the tilt of the carcass hanger with respect to the hanger rod;
Figure 8 is a side view of the shackle assembly, showing the lower portion of the hanger rod and the carcass hanger, with the carcass hanger locked at a predetermined angle with respect to the hanger rod, and with guide rods controlling the attitude of the carcass hanger as it assumes its locked position;
Figure 9 is a side view of the shackle assembly, showing the lower portion of the hanger rod and the carcass hanger, similar to Fig. 4, but showing how the movement of the shackle assembly can be controlled with a single guide rod after the carcass hanger has been locked with respect to the hanger rod; and
Figure 10 is a shackle assembly combining the provisions of the shackles of figures 1-4 and figures 5-9.

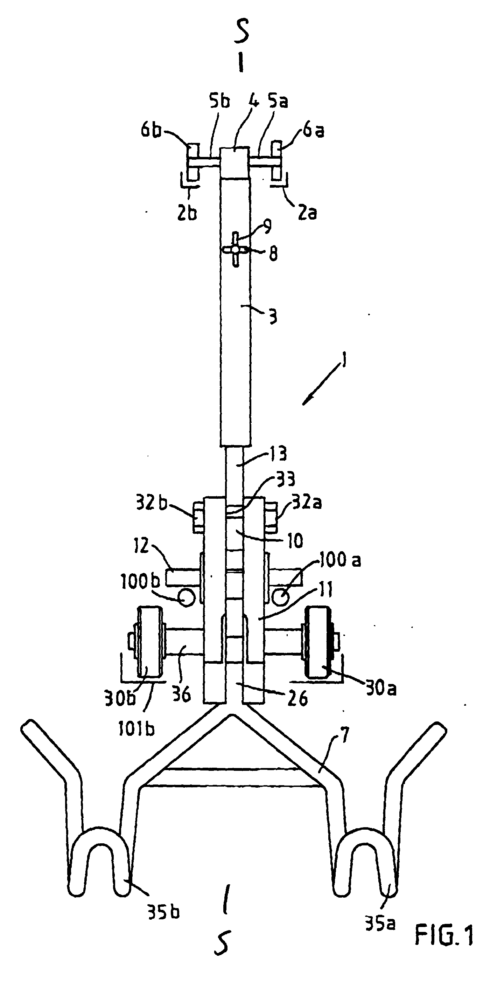

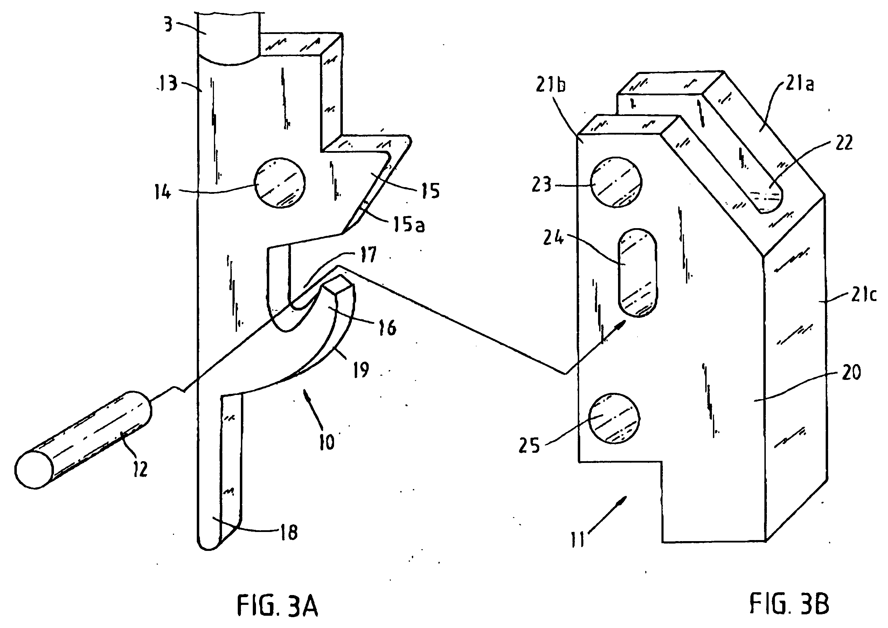

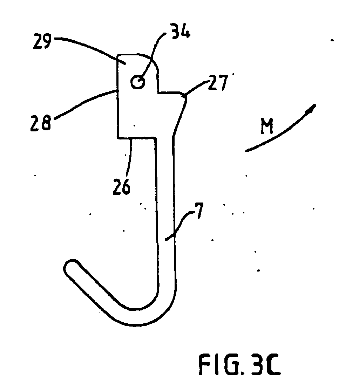

Referring to figures 1-3, the shackle 1 comprises a suspension member 40 and a hanger member 50. The suspension member 40 comprises a suspension rod 3, which at its upper end 4 is provided with two pins 5a and 5b, onto which wheels 6a and 6b, respectively, have been attached. The wheels find support in stationary guiding rails 2a and 2b of an overhead conveyor system. The shackle 1 is propelled along the guiding rails 2a,b by means of a pulling chain 8, which connects a series of similar shackles and is attached to the shackle 1 at 9. Of course, alternative ways of connecting the hanger suspension rod 3 to a conveyor system.

At its lower end, the suspension rod 3 merges into a hook-like member 10 consisting of a narrow, vertically arranged plate 13 -made from steel, for instance-, which is provided with a nose 15 having a convex, buckled lower edge 15a, a hook 16 delimiting a lock pin receiving space 17, and a depending stop strip 18. In the upper portion of the plate 13 a hole has been arranged for accommodation of a hinge pin connection 32,33. The hook 16 has a smooth convex lower edge 19.

The hanger member 50 comprises a first part consisting of a connection block 11 -preferably made from synthetic material- and a second part consisting of a hanger 7. The connection block 11 is generally U-shaped having two side walls 21a, 21b and a (vertical) bottom wall 21c. At their upper portion, the side walls 21a,b are bevelled and define between them a slit for accommodation of nose 15 of the plate 13. The side walls 21a,b are furthermore provided with upper holes 23a,b for the hinge pin connection 32,33. Below that location, vertical slots 24a,b have been arranged in the side walls 21a,b for receiving a locking pin 12, which will be discussed further below. Moreover, side walls 21a,b have been provided with holes 25a,b, for receiving a pin 29 which is provided with a further set of suspension wheels 30a,b.

The hanger 7 has a pair of leg suspenders 35a,b at its lower end and a narrow, vertically extending plate 26 at its upper end. The plate 26 has a nose 27 and an upper portion 29 with a hole 34 through which the pin 36 extends. In addition, the upper portion 29 has a vertical abutment edge 28 and a horizontal lower edge.

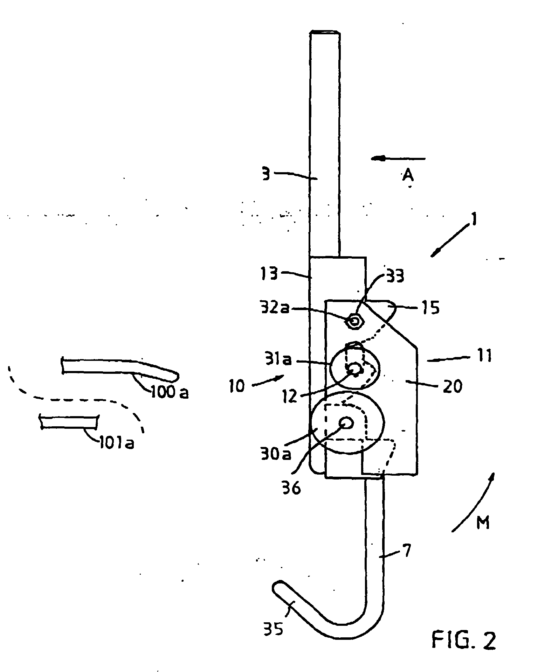

As will be understood, the block 11 and the plate 13 and thus the suspension member 40 and the hanger member 50 are articulated to each other at hinge pin connection 32,33. As can be seen in figure 2, in the normal position the pin 12 -due to its own weight- is in the bottom portion of the receiving space 17 and horizontally confined by hook 16 as well as by the boundaries of slots 24a,b. In this case, the suspension member 40 and the hanger member 50 are locked to each other and cannot hinge with respect to each other about pin 33.

When the shackle 1, which is travelling in the direction A, has arrived at the downstream end of guiding rods 100a,b (figure 2), the locking pin 12 will be lifted by the upper edge of the rods 100a,b and move upwards in slots 24a,b until a position above the hook 16, thus releasing the lock between suspension member 40 and hanger member 50. The hanger member 50 is now free to pivot in the direction M.

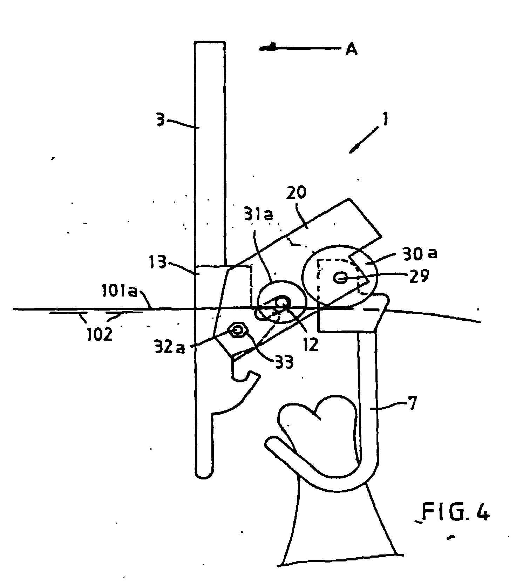

In this example, the free pivoting movement is used for weighing the carcass. At a -in figure 4 schematically depicted- weighing station the shackle first meets unlocking rods 100a,b and immediately thereafter guiding/supporting rails 101a,b. These guiding rails have an upwardly curved course, due to which upon continued travel of the shackle 1 -the rod 3 being kept at a constant level- the supporting wheels 30a,b are urged upwards and at least the block 20 will be swung upwards in the direction M (figure 2). The arrangement of the guiding rails 101a,b with respect to the overhead conveyor is such that the block 20 is rotated over an angle exceeding 90 degrees. When the block 20 is swung away from the suspension member 10, the abutment surface 28 becomes spaced from the strop strip 18 and the actual hanger 7 is allowed to freely tend to a vertical orientation under the influence of gravitational forces, which is permitted by the hinged connection to the block 20 by the pin 36. Arriving at the weighing or loading cells 102 arranged in or at the rails 101a,b, the weight of the carcass suspended by the hanger 7 is measured and electronically processed in a usual manner. Due to the orientation/position of the block 20 and the freely hinged support of the hanger 7 the weighing process can take place in an optimally reliable manner with as little as possible disturbances during continued travelling of the carcass hanging down between the rails 101a,b.

At the end of the weighing station, the guiding rails 101a,b end so that the wheels 30a,b fall downwards and allow a swinging back to a vertical orientation of the block 20. Then the abutment surface 28 of the hanger 7 abuts against stop strip 18, while inner surfaces of the block 20 abut against the nose 27 of hanger 7, thus surrounding the hanger 7 on two horizontal sides. simultaneously, the pin 12, guided by edge 15a, has arrived within the hook 16 and is permitted to fall down in the receiving space 17 under the gravitational forces, so as to lock the block 20 to suspension part 13, while confining hanger 7 in between them. The shackle 1 then holds the carcass stable for improving further processing.

Alternatively, there is a guiding plate located below the conveyor. These guiding plate tilts and pushes the carcass towards a more horizontal orientation, which is facilitated by the pivoting movement of hanger member about the hinge pin 33. At its downstream side, the guiding plate merges into a weighing plate, where the weight of the carcass is determined, during continued travel, the carcass being pulled over the weighing plate. Following the weighing plate, the carcass is permitted to swing downwards again, in which the hanger member and the block 11 pivot back about pin 33 until the plate 26 abuts the strip 18 and the locking pin 12 snaps into the receiving space 17 again.

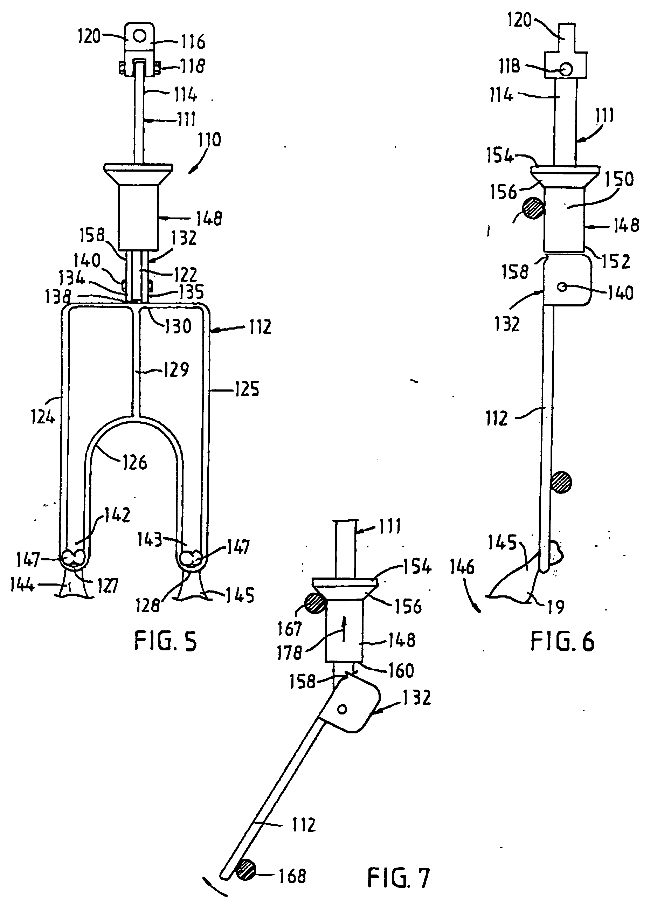

Referring to an alternative embodiment of the shackle according to the invention depicted in figures 5-9, figure 5 illustrates the poultry shackle assembly 110 which includes a hanger rod 111 and a carcass hanger 112. The upper or first end 114 of the hanger rod 111 is pivotally connected to the connector bracket 116 by bolt 118 extending through aligned openings (not shown) of the bracket and hanger rod, and the upper tab 120 of the bracket attaches to a trolley of an overhead conveyor rail (not shown). The lower or second end 122 of the hanger rod 14 is connected to carcass hanger 112.

Carcass hanger 112 includes side arms 124 and 125, arch-shaped inner rod 126 which is connected at its lower ends to one leg of each of the U-shaped bends 127 and 128, with the other leg of the bends being connected to the lower ends of the side arms 124 and 125, respectively. Vertical stabilizer bar 129 is connected at its lower end to the mid point of arch-shaped inner rod 126, and cross bar 130 is connected at its opposite ends to the upper ends of the side arms 124 and 125, and intermediate its ends to the upper end of vertical stabilizer bar 129. Clevis 32 is rigidly mounted to the mid point of cross bar 130 and includes a pair of clevis plates 134 and 135 that are spaced from each other and are parallel to each other to form a clevis gap 138. Bolt 140 extends through aligned openings (not shown) of the lower end 122 of the hanger rod 111 and through the clevis plates 134 and 135, thereby pivotally connecting the upper portion of the carcass hanger 112 from the lower portion of the hanger rod 111.

The U-shaped bends 127 and 128 formed at the lower ends of the side arms 124 and 125 and arch-shaped inner rod 126 form recesses 142 and 143 for receiving the legs 144 and 145, respectively of a poultry carcass 146.

Lock collar 148 is slidably received on the elongated hanger rod 111, with its central opening 150 (Figure 6) surrounding the hanger rod. The central opening 150 is cylindrical so that the lock collar can rotate about the hanger rod. The lock collar includes a cylindrical body portion 152 and an upper outwardly protruding flange 154. A sloped annular shoulder surface 156 of the flange 154 extends between the enlarged portion of the flange 154 and the smaller cylindrical surface 152 of the lock collar.

Clevis 132 at the upper end of carcass hanger 112 has lock recesses 158 formed in an upper portion thereof, in the same place on both clevis plates, so that the lock recesses 158 straddle the lower end 122 of the hanger rod 111. The lock recesses face laterally when the carcass hanger 112 extends downwardly under the influence of gravity below the hanger rod.

When the carcass hanger 112 is tilted as indicated in Figures 7-9, the lock recesses 158 move beneath the lock collar 148, and when the carcass hanger achieves a predetermined angle with respect to the hanger rod 111, the lock recesses will be in alignment with the lower edge 160 of the lock collar 148 so that the lock collar 148 functions as a lock member and will drop under the influence of gravity into engagement with the lock recesses 158. Thus, the recesses 158 function as lock engagement surfaces and lock against the lock collar to prevent the carcass hanger 112 from returning to its vertical position.

As illustrated in Figs. 7,8 and 9, guide rods 166, 167 and 168 are used to control the movements of the hanger rod 111, carcass hanger 112, and lock collar 148.

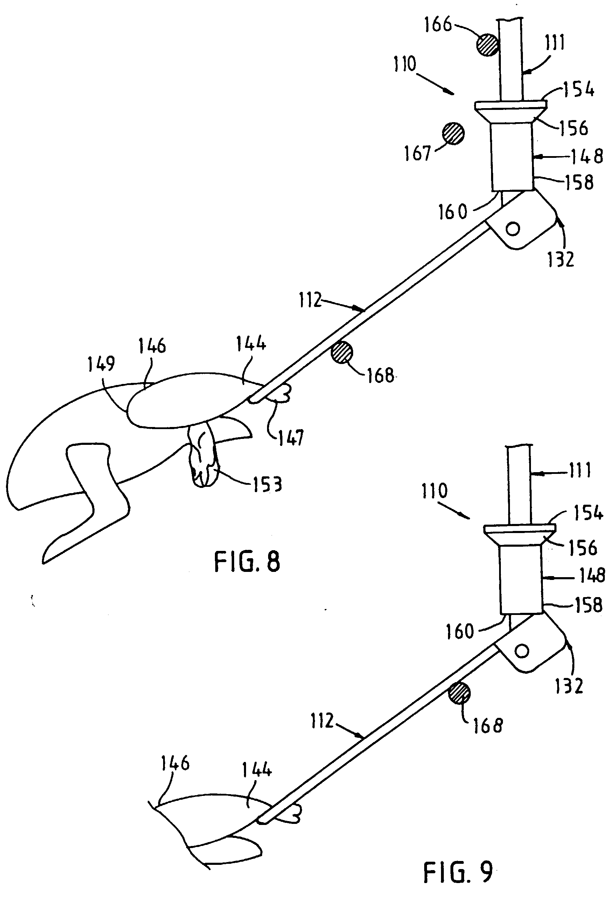

As shown in Figure 8, the poultry carcass 146 is suspended from the carcass hanger 112 of the shackle assembly 110 by inserting the legs 144 and 145 of the carcass from in front of the shackle into the recesses 142 and 143 (Figure 5). The poultry shackle assembly 110 is oriented so that its lock recesses 158 face the bird as the bird is being hung in the hanger 112, so that the legs 144 and 145 are thrust between the arch-shaped inner rod 126 and the side arms 124 and 125 of the carcass hanger 112, and then are moved downwardly so that the enlarged knuckles 47 of the leg are placed on the back side of the poultry shackle assembly 110, with the major portion of the legs 144 and 145 and the remaining portion of the carcass 146 extending forwardly of the shackle assembly.

As the shackle assembly advances along the poultry processing path, the carcass hanger 112 will be engaged by a stationary guide rod 168 which begins to tilt the carcass hanger 112 and the poultry carcass 146 forwardly of the poultry shackle assembly 110. Since the carcass 146 and carcass hanger 112 weigh substantially more than the hanger rod 111, the tilting movement of the hanger rod must be restrained, as by a similar guide rod 166, so as to keep the hanger rod 111 in a substantially vertical attitude. This is illustrated best in Figure 7.

As the carcass hanger and poultry carcass 146 begin to tilt, the orientation of the legs 144 and 145 of the carcass 146 and the carcass hanger 112 causes the bird to tilt in unison with the carcass hanger, instead of being allowed by gravity to assume a vertical attitude. The knuckles 147 being positioned behind the carcass hanger maintain the legs 144 and 145 of the carcasses in a substantially fixed relationship with respect to the carcass hanger 112 during the tilting function, so that the legs are projected laterally instead of being allowed to be suspended downwardly. Further, since the recesses 142 and 143 which receive the legs of the carcass are spread apart, there is no visual obstruction between the visceral cavity 176 of the bird and the inspector who is located behind the poultry shackle assembly 110.

As the carcass hanger 112 continues along the processing line, the guide rod 168 continues to lift the carcass hanger so as to further rotate the lock recesses 158 to an upwardly facing position. In the meantime, a guide rod 167 engages the sloped annular surface 156 of the lock collar 148, to lift the lock collar upwardly as indicated by direction arrow 178 (Figure 7), so as to not impede the tilting function. Also, guide rod 167 resists the tilting movement of hanger rod 111.

As illustrated in Figure 8, when the carcass hanger 112 achieves a predetermined tilt angle with respect to the hanger rod 111, the lock recesses 158 will have rotated through a substantially upwardly facing attitude so that the lower edge 160 of the lock collar 148 can be received in the lock recesses 158. At this point, the guide rod 167 will be in a position withdrawn from the lock collar 148, so that the lock collar can move by gravity into the lock recesses 158 of the clevis 132. This locks the carcass hanger 112 against a return motion, so that it maintains its tilt angle with respect to the hanger rod 111. This orients the carcass 146 and its visceral cavity 149 at an optimum angle with respect to the inspector who sits across, behind the poultry shackle assembly 110, so that the visceral cavity 149 is oriented for visual inspection.

As the poultry shackle assembly 110 continues its advancement along the processing line, the guide rod 168 is angled so that it engages the carcass hanger 112 closer to the clevis 132 so that it is out of the way for visual inspection of the visceral cavity 149 of the poultry carcass, yet holds the hanger rod 111 and carcass hanger 112 in the desired attitudes, while these parts remain locked.

Typically, the carcass hanger and its carcass will be tilted when being advanced just beyond the step of drawing the viscera 153 from the cavity of the bird, so that the viscera 153 has not been completely separated from the bird but is suspended from the bird. This enables the inspector to inspect the drawn viscera of each bird and to simultaneously inspect the cavity of each bird.

When it is time to release the tilt of the carcass hanger with respect to the hanger rod, a guide rod, similar to guide rod 167 of Figure 7, is utilized to engage the sloped annular surface 156 of the lock collar 148, lifting the lock collar in the direction as indicated by arrow 178, to remove the lower edge 160 of the lock collar from the lock recesses 158 of the clevis plates 134 and 135. This allows gravity to return the carcass hanger 112 to a vertical attitude. This return movement can be stabilized by guide rods, such as guide rods 167 and 168 of Figure 7.

Thus, it can be seen from the foregoing description that the clevis 132 with the lock recesses 158 formed in the clevis plates 134 and 135, together with the lock collar 148 function as a lock means for holding the carcass hanger 112 and the carcass 146 in a predetermined tilted attitude with respect to the hanger rod 111. Further, the flange 154 and sloped annular surface 156 of the lock collar form a protrusion of the lock means against which the guide rod 167 can function to lift the lock collar 148 out of engagement with respect to the clevis 132.

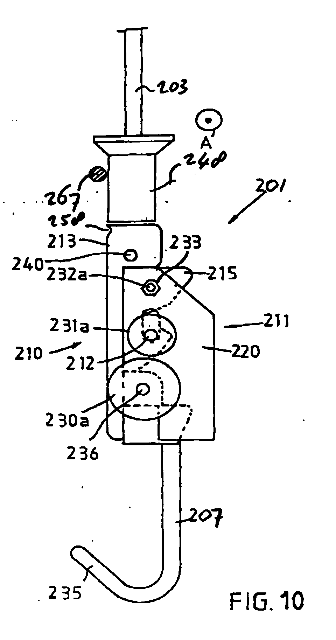

Figure 10 shows a shackle combination 201 in a situation corresponding to figure 6, in which combination the rod 203 is provided with a lock collar 248 which is vertically slidably arranged on rod 203. The plate 213 - largely corresponding to plate 13 of the shackle of figure 1-4- is hinged to the lower end of rod 203 at 240 and is provided with a lock recess 258, in correspondence with clevis 132 of the shackle of figures 5-9. Thus, by urging the locked assembly of parts 210 and 211 to an orientation as depicted in figure 8, in which the angled position is locked by the engagement of the lower edge of collar 248 in recess 258 and the carcass can be inspected. After that, the parts 210 and 211 are allowed to swing back to a vertical orientation can due to the lifting of collar 248 by rod 267. Before the inspection or after that use can be made of the other locking/hinging connection which has been discussed above under reference to figures 1-4 for weighing the carcass. It will be understood that suitable means will have been provided for turning the shackle about a vertical axis from an orientation in which the hanger has its plane of symmetry S in line with the processing path (in case of weighing) to an orientation in which the plane of symmetry is perpendicular to the processing path (in case of inspection).

Although a preferred embodiment of the invention has been disclosed in detail herein, it will be obvious to those skilled in the art that variations and modifications of the disclosed embodiment can be made without departing from the spirit and scope of the invention as set forth in the following claims.

## Claims

1. A shackle for transporting a poultry carcass suspended by its legs along a processing line, comprising a hanger suspension member having a first end adapted to be connected to an overhead conveyor and a second end; a carcass hanger having a first end hinged through a first hinged connection to said second end of the hanger suspension member and a second end having poultry leg holding means for suspending the poultry carcass during movement along the overhead conveyor, the first hinged connection having a substantially horizontal axis; and locking means for locking the hinged connection in at least one position in at least one hinging direction.

2. Shackle according to claim 1, wherein said locking means is arranged to be vertically movable with respect to said hanger suspension member between a locking position and a hinge connection releasing position.

3. Shackle according to claim 2, wherein said locking means is arranged to be vertically movable with respect to said carcass hanger between a locking position and a hinge connection releasing position.

4. Shackle according to claim 2 or 3, wherein said locking position is located below said hinge connection release position.

5. Shackle according to any one of the claims 1-4, the arrangement being such that in said locked condition said carcass hanger is substantially vertically oriented.

6. Shackle according to claim 5, wherein said carcass hanger is freely hingeable when not in said locked condition.

7. Shackle according to any one of the preceding claims, wherein the carcass hanger comprises a first hanger part being connected to the hanger suspension member and a second hanger part forming the actual hanger, said first and second hanger parts being connected to each other by means of a second hinged connection.

8. Shackle according to claim 7, wherein said second hinged connection is provided with sidewards extending supports, such as wheels, in particular for support on stationary guiding and weighing members.

9. Shackle according to claim 7 or 8, wherein the second hinged connection is adapted to allow a rotation of the first hanger part with respect to the second hanger part about an angle of more than 90 degrees.

10. Shackle according to claim 7, 8 or 9, said first hanger part and said second end of said hanger suspension member are provided with surfaces for confining said second hanger part in the locked condition of the carcass hanger.

11. Shackle according to any one of the claims 5-10, wherein said hanger suspension member has a hook member and said locking means comprises a locking pin which is arranged for movement in and out of the hook member.

12. Shackle according to claim 11, wherein said carcass hanger is provided with at least one slot for guidance of the locking pin during its movement in and out of the hook member.

13. Shackle according to claim 12, wherein said hinge connection is located above said locking pin.

14. Shackle according to any one of the preceding claims, wherein said hanger suspension member and said carcass hanger are shaped to fit at least partly into each other in the locked position.

15. Shackle according to claims 11 and 15, wherein said carcass hanger forms a substantially U-shaped receiving space for the hook member, as viewed in horizontal cross-section.

16. Shackle according to claim 15, wherein said U-shaped receiving space is arranged to open in the processing direction of the overhead conveyor.

17. Assembly of an overhead conveyor with a plurality of shackles according to any one of the preceding claims, and stationary operating means for operating the locking means.

18. Shackle according to any one of the claims 1-4, the arrangement being such that in said locked condition said carcass hanger is at an angle -preferably at an angle of between 20-70 degrees- to the vertical.

19. Shackle according to claim 18, wherein said carcass hanger is freely hingeable outside said locked condition.

20. Shackle for transporting a poultry carcass suspended by its legs (or other parts) along a processing line where various subsequent operations are carried out on the carcass, comprising a hanger suspension member and a carcass hanger, said hanger suspension member and said carcass hanger being articulated to each other in a connection, said shackle having means for locking said articulated connection in at least one position and being movable to release said articulated connection.

21. Shackle according to claim 20, wherein said hanger suspension member is elongated and wherein said articulated connection is located at the lower end of said hanger connection member.

22. Assembly of an overhead conveyor with a plurality of shackles according to any one of the preceding claims, and stationary operating means for operating said locking means on the shackle.

23. Shackle for transporting a poultry carcass suspended by its legs along a processing line and for tilting the carcass to a position for visual inspection of the visceral cavity of the carcass as the carcass is advanced along the processing line, comprising:
a hanger rod having a first end adapted to be connected to a trolley of a suspended rail and trolley transport line, and a second end;
a carcass hanger having a first end and a second end with said second end including leg receiving recesses for receiving the legs of a poultry carcass and suspending the poultry carcass for movement along the processing line;
a clevis mounted to the first end of said carcass hanger and tiltably connected to said second end of said hanger rod for tilting said carcass hanger and a poultry carcass suspended therefrom with respect to said hanger rod for visual inspection of the visceral cavity of the carcass;
a lock member mounted to said hanger rod and movable with respect to said hanger rod into and out of locking engagement with said clevis of said carcass hanger to hold said carcass hanger in tilted relationship with respect to said hanger rod; and
said lock member including a protrusion for engagement and moving said lock member out of locking engagement with said clevis.

24. Shackle according to claim 23, wherein:
said hanger rod is elongated;
said lock member comprising a lock collar slidable along said hanger rod into and out of engagement with said clevis; and
said clevis including a notch for receiving said lock collar when said carcass hanger is tilted to a predetermined angle with respect to said hanger rod to lock said carcass hanger and a carcass suspended thereby in a tilted relationship with respect to said hanger rod.

25. Shackle according to claim 24, wherein:
said protrusion of said lock means comprises a flange extending about said lock collar.

26. Shackle according to claim 23, 24 or 25, further including:
stationary shackle guide means positioned along the processing line of said hanger rod and said carcass hanger for tilting said carcass hanger with respect to said hanger rod; and
guide means positioned along the processing line of said hanger rod and said carcass hanger for moving said lock means away from said clevis to unlock said lock means from said clevis.

27. Shackle for transporting an eviscerated poultry carcass suspended by its legs along a processing line and for tilting the carcass to a position for visual inspection as the carcass is advanced along the processing line, comprising:
a hanger rod having an upper end for connection to a trolley of a suspended rail and trolley transport line and a lower end;
a carcass hanger having an upper end and a lower end with said lower end including leg receiving recesses for receiving the legs of a poultry carcass and suspending the poultry carcass for movement along the processing line;
said carcass hanger being tiltably connected at its upper end to said lower end of said hanger rod for tilting said carcass hanger and a carcass suspended therefrom with respect to said hanger rod for visual inspection of the visceral cavity of the carcass;
said carcass hanger including at its upper end a lock engagement surface; and
a lock member mounted to said hanger rod and movable with respect to said hanger rod into and out of locking engagement with said lock engagement surface of said carcass hanger to hold said carcass hanger in tilted relationship with respect to said hanger rod.

28. Shackle according to claim 27, wherein:
said hanger rod is elongated;
said lock member comprises a lock collar slidable along said hanger rod into and out of engagement with said lock engagement surface; and
said lock engagement surface including a notch for receiving said lock collar when said carcass hanger is tilted to a predetermined angle with respect to said hanger rod to lock said carcass hanger and a carcass suspended thereby in a tilted relationship with respect to said hanger rod.

29. Shackle according to claim 28, wherein:
said lock collar includes a flange extending about said lock collar for engagement by a lifting means to move said lock collar out of engagement with said notch.

30. Shackle according to claim 29, and further including:
stationery shackle guide means positioned along the processing line of said hanger rod and said carcass hanger for tilting said carcass hanger with respect to said hanger rod; and
lock means guide means positioned along the processing line of said hanger rod and said carcass hanger for moving said lock means away from said lock engagement surface to unlock said lock means from said lock engagement surface.

31. A method of inspecting the previously eviscerated visceral cavities of poultry carcasses comprising:
suspending carcasses by their legs from carcass hangers of poultry shackle assemblies each having a carcass hanger tiltably suspended from a hanger rod by inserting the knuckles of the legs through the front leg-receiving recesses of each carcass hanger;
advancing the poultry shackle assemblies and their carcasses in series along a processing line;
in response to advancing the poultry shackle assemblies along the processing line tilting the carcass hanger and carcass of each poultry shackle assembly forwardly with respect to the hanger rod to tilt the legs of the carcass laterally;
as the carcass hanger is tilted, restraining the tilting of the hanger rod;
while the carcass anger and carcass of each shackle assembly are tilted, visually inspecting the visceral cavity of the carcass; and
after the visceral cavity has been inspected returning the carcass hanger to a vertical attitude.

32. The method of claim 9 and further including the step of locking the carcass hanger with respect to the hanger rod in response to the carcass hanger reaching a predetermined angle of tilt with respect to the hanger rod.

33. A method of weighing poultry carcasses comprising:
suspending carcasses by their legs from carcass hangers of poultry shackle assemblies each having a carcass hanger bracket suspended from a hanger rod by inserting the knuckles of the legs through the front leg-receiving recesses of each carcass hanger;
advancing the poultry shackle assemblies and their carcasses in series along a processing line while maintaining a rigid -though releasable- connection between said hanger rod and said carcass hanger bracket;
in response to advancing the poultry shackle assemblies along the processing line unlocking said rigid connection between said hanger rod and said carcass hanger bracket so as to allow a free swinging movement of the carcass hanger bracket with respect to the hanger rod in a vertical plane extending in processing direction;
supporting said carcass hanger bracket on stationary supports while advancing said poultry shackle assemblies towards and into a weighing station;
weighing each carcass hanger bracket with its carcass
by means of weighing means accommodated in said supports; and
after weighing ceasing to support said carcass hanger bracket on said stationary supports and preferably also locking said connection between the hanger rod and the carcass hanger bracket.

34. Shackle according to any one of the claims 1-4 in combination with any one of the claims 23-30.

35. Shackle assembly for transporting a poultry carcass suspended by its legs along a processing line, comprising
a hanger suspension member having a first end adapted to be connected to an overhead conveyor and a second end, said suspension member being provided with an internal, primary hinge connection, said primary hinge connection having a substantially horizontal axis;
a carcass hanger having a plane of symmetry and a first end hinged through a secondary hinged connection to said second end of the hanger suspension member and a second end having poultry leg holding means for suspending the poultry carcass during movement along the overhead conveyor, the secondary hinged connection having a substantially horizontal axis;
first releasable locking means for locking said primary hinge connection in an angled position in which the hanger is tilted towards the lateral side of the path of conveyance; and
second releasable locking means for locking said secondary hinged connection in a vertical position and -after being released- allowing a swinging movement perpendicular to said plane of symmetry.
